(19) Europäisches Patentamt
European Patent Office
Office européen des brevets

(11) EP 2 314 163 A2

(12) # EUROPEAN PATENT APPLICATION

(43) Date of publication:
**27.04.2011 Bulletin 2011/17**

(21) Application number: **10185314.1**

(22) Date of filing: **19.07.2006**

(51) Int Cl.:
***A01N 43/653*** *(2006.01)*
*A01N 43/90 (2006.01)*
*A01N 43/32 (2006.01)*
*A01N 53/00 (2006.01)*
*A01N 41/10 (2006.01)*
*A01N 51/00 (2006.01)*
*A01N 47/26 (2006.01)*
*A01N 43/56 (2006.01)*
*A01N 43/54 (2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**BA HR RS**

(30) Priority: **21.07.2005 EP 05015862**

(62) Document number(s) of the earlier application(s) in accordance with Art. 76 EPC:
**06762706.7 / 1 903 870**

(71) Applicant: **Syngenta Participations AG**
**4058 Basel (CH)**

(72) Inventors:
- **Brandl, Franz**
  **4058 Basel (CH)**
- **Oostendorp, Michael**
  **4058 Basel (CH)**
- **Zeun, Ronald**
  **4332 Stein (CH)**

(74) Representative: **Van den Berg, Frans Richard**
**Syngenta Crop Protection Münchwilen AG**
**Intellectual Property**
**Schaffhauserstrasse**
**4332 Stein (CH)**

Remarks:
This application was filed on 01-10-2010 as a divisional application to the application mentioned under INID code 62.

(54) **Fungicidal compositions comprising tebuconazole**

(57) A formulated fungicide mixture comprising (A) Tebuconazole; and (B) one or more compounds selected from Difenoconazole, Azoxystrobin, and (C) one or more customary formulation adjuvants; with the proviso that the mixture excludes the mixtures consisting, as active ingredients, of tebuconazole, difenconazole and fludioxonil.

EP 2 314 163 A2

## Description

The present invention relates to novel formulated mixtures useful for control or prevention of pathogenic and/or pest damage in a plant propagation material, plant, parts of plant and plant organs that grow at a later point in time.

It is known that Tebuconazole shows biological activity against phytopathogenic fungi, e.g. known from EP-0-040-345 where its properties and methods of preparation are described. On the other hand various fungicidal compounds of different chemical classes are widely known as plant fungicides for application in various crops of cultivated plants. However, crop tolerance and activity against phytopathogenic plant fungi do not always satisfy the needs of agricultural practice in many incidents and aspects.

A triple mixture consisting of Tebuconazole, Difenoconazole and Fludioxonil is commercially available and a mixture of Tebuconazole, Carboxin and Triadimenol is known.

The protection of plant propagation materials (especially seeds) with active ingredients are target applications which partially address the need for a reduction of environmental and worker exposure when used alone or in conjunction with foliar or in-furrow active ingredient applications.

In particular, in the instance a pathogen and/or pest has become, or risks becoming resistant to the previously known products, improved methods of control or prevention are sought.

There is a continuing need to provide pesticidal compositions, which provide improved, for example, biological properties, for example, synergistic properties, especially for controlling pathogens and/or pests in useful plants grown from treated plant propagation material.

That need is solved according to the invention by the provision of the present mixtures. Accordingly, in a first aspect, the present invention provides a formulated mixture comprising (A) Tebuconazole; and (B) one or more compounds selected from Carboxin, Chlorothalonil, Difenoconazole, Azoxystrobin, Fluquinconazole, Metalaxyl, Mefenoxam, Thiram, Abamectin, Lambda-cyhalothrin, Beta-cyflutrin, Tefluthrin, Thiamethoxam, Flubendamide and a compound of formula A-1

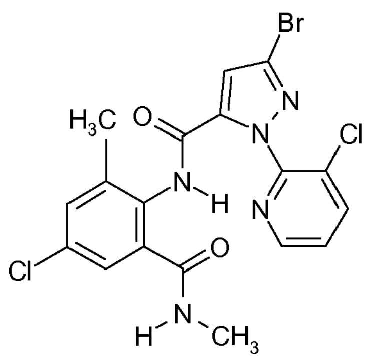

A1,

and (C) one or more customary formulation adjuvants; with the proviso that the mixture excludes the mixtures consisting, as active ingredients, of (i) tebuconazole, carboxin and tridimenol and (ii) tebuconazole, difenconazole and fludioxonil.

In a second aspect, the present invention provides a method of controlling or preventing pathogenic damage or pest damage in a plant propagation material, a plant, parts of a plant and/or plant organs that grow at a later point in time, which comprises applying on the plant propagation material a composition comprising a formulated mixture defined in the first aspect.

Accordingly, in a third aspect, the present invention provides a method of protecting a plant propagation material, a plant, parts of a plant and/or plant organs that grow at a later point in time against pathogenic damage or pest damage by applying to the plant propagation material a composition comprising a formulated mixture defined defined in the first aspect.

The present invention also provides in a fourth aspect a plant propagation material protecting composition comprising a mixture defined in the first aspect.

The invention also relates to a plant propagation material treated with a composition defined in the fourth aspect.

Further, an embodiment of the present invention relates to a method which comprises (i) treating a plant propagation material, such as a seed, with a composition as defined in the fourth aspect, and (ii) planting or sowing the treated propagation material, wherein the composition protects against pathogenic damage or pest damage of the treated plant propagation material, parts of plant, plant organs and/or plant grown from the treated propagation material.

Also, an embodiment of the present invention relates to a method which comprises (i) treating a plant propagation material, such as a seed, with a composition as defined in the fourth aspect, and (ii) planting or sowing the treated

propagation material, and (iii) achieving protection against pathogenic damage or pest damage of the treated plant propagation material, parts of plant, plant organs and/or plant grown from the treated propagation material.

The active ingredient combinations according to the invention can have very advantageous properties for protecting plants against (i) pathogenic, such as phytopathogenic, especially fungi, attack or infestation, which result in a disease and damage to the plant and/or (ii) pest attack or damage; particularly in instance of plants, the present invention can control or prevent pathogenic damage and/or pest damage on plant propagation material, such as a seed, and parts of plant, plant organs and/or plant grown from the treated plant propagation material.

Controlling, preventing or protecting and its inflections, within the context of the present invention, mean reducing any undesired effect, such as

- pathogenic, such as phytopathogenic, especially fungi, infestation or attack of, and
- pathogenic damage or pest damage on,

a plant, part of the plant, plant organs or plant propagation material to such a level that an improvement is demonstrated.

These properties are for example the synergistically enhanced action of active ingredient combinations of the invention, resulting in lower pathogenic damage and/or pest damage, lower rates of application, broadening of the pesticidal spectrum of the combination or a longer duration of action. In the instance of agriculture, the enhanced action is found to show an improvement in the growing characteristics of a plant by, for example, higher than expected control of the pathogenic infestation and/or pest damage.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

Accordingly, the present invention also provides a method of improving the growing characterictics of a plant, which comprises applying to a plant propagation material a composition defined in the fourth aspect.

However, besides the actual synergistic action with respect to pesticidal activity, the mixtures according to the invention also have further surprising advantageous properties which can also be described, in a wider sense, as synergistic activity. Examples of such advantageous properties that may be mentioned are: advantageous behaviour during formulation and/or upon application, for example upon grinding, sieving, emulsifying, dissolving or dispensing; increased storage stability; improved stability to light; more advantageous degradability; improved toxicological and/or ecotoxicological behaviour; or any other advantages familiar to a person skilled in the art.

The present invention is especially suitable to increase the yield and/or quality of useful plants, such as crop yield of crop plants.

In an embodiment, the composition according to the fourth aspect can also be used to treat stored products, such as grain, for protection against pathogens and/or pests.

The compounds (A) and (B) defined in the first aspect are active ingredients for use in the agrochemical industry (also known as pesticides). A description of their structure as well as other pesticides (e.g., fungicides, insecticides, nematicides) can be found in the e-Pesticide Manual, version 3.1, 13th Edition, Ed. CDC Tomlin, British Crop Protection Council, 2004-05. The compound of formula A-1 is described in WO-03/015519, and compound of formula A is described in described in WO 03/074491, WO 2006/015865 and WO 2006/015866; the compound of formula A occurs in four

different stereoisomeric forms, all of which have fungicidal activity. Said stereoisomers and mixtures thereof are described on pages 25, 32-36 of WO 2006/015865.

The mixture according to the invention may also comprise more than one of the active components (B), if, for example, a broadening the spectrum of phytopathogenic disease control is desired. For instance, it may be advantageous in the agricultural practice to combine two or three components (B) with Tebuconazole.

A preferred embodiment of the present invention is represented by those mixtures which comprise as component (B) Carboxin, Chlorothalonil, Difenoconazole, Fluquinconazole, Metalaxyl, Mefenoxam, Azoxystrobin or Thiram.

A preferred embodiment of the present invention is represented by those mixtures which comprise as component (B) Difenoconazole or Fluquinconazole.

A preferred embodiment of the present invention is represented by those mixtures which comprise as component (B) Metalaxyl or Mefenoxam.

A preferred embodiment of the present invention is represented by those mixtures which comprise as component (B) Carboxin, preferably a mixture consisting of Tebuconazole and Carboxin.

A preferred embodiment of the present invention is represented by those mixtures which comprise as component (B) Azoxystrobin.

A preferred embodiment of the present invention is represented by those compositions which comprise as component (B) Chlorothalonil.

A preferred embodiment of the present invention is represented by a mixture consisting of Tebuconazole and Chlorothalonil.

A preferred embodiment of the present invention is represented by those mixtures which comprise as component (B) Difenoconazole.

A preferred embodiment of the present invention is represented by a mixture consisting of Tebuconazole and Difenoconazole.

A preferred embodiment of the present invention is represented by those mixtures which comprise as component (B) Fluquinconazole.

A preferred embodiment of the present invention is represented by those mixtures which comprise as component (B) Metalaxyl.

A preferred embodiment of the present invention is represented by those mixtures which comprise as component (B) Mefenoxam, preferably a mixture consisting of Tebuconazole and Mefenoxam.

A preferred embodiment of the present invention is represented by those mixtures which comprise as component (B) Thiram.

A preferred embodiment of the present invention is represented by a mixture consisting of Tebuconazole and Thiram.

A preferred embodiment of the present invention is represented by those mixtures which comprise as component (B) abamectin, lambda-cyhalothrin, beta-cyflutrin, tefluthrin, thiamethoxam, flubendamide or a compound of formula A-1.

A preferred embodiment of the present invention is represented by those mixtures which comprise as component (B) abamectin, tefluthrin or thiamethoxam.

A preferred embodiment of the present invention is represented by those mixtures which comprise as component (B) Abamectin.

A preferred embodiment of the present invention is represented by those mixtures which comprise as component B) Tefluthrin.

A preferred embodiment of the present invention is represented by those mixtures which comprise as component B) Thiamethoxam.

A preferred embodiment of the present invention is represented by those mixture which comprise as component (B) a compound of formula A-1.

In an embodiment a mixture comprises as component (B) Difenoconazole and further comprise Azoxystrobin or Mefenoxam.

In an embodiment a mixture comprises as component (B) Difenoconazole and further comprise Azoxystrobin.

In an embodiment a mixture comprises as component (B) Difenoconazole and further comprise Mefenoxam.

A further preferred embodiment of the present invention is represented by a mixture which comprises one ormore component (B) and a further pesticide, preferably one or more of a further fungicide, further insecticide and further nematicide.

The active ingredient combinations are effective especially against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Puccinia, Ustilago, Tilletia); Fungi imperfecti (also known as Deuteromycetes; e.g. Botrytis, Helminthosporium, Rhynchosporium, Fusarium, Septoria, Cercospora, Alternaria, Pyricularia and Pseudocercosporella herpotrichoides); Oomycetes (e.g. Phytophthora, Peronospora, Pseudoperonospora, Albugo, Bremia, Pythium, Pseudosclerospora, Plasmopara).

According to the invention "useful plants" typically comprise the following species of plants: cereals, such as wheat, barley, rice, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broadleaved trees or evergreens, for example conifers. This list does not represent any limitation.

The active ingredient combinations of the present invention are of particular interest for controlling a large number of pathogens in various useful plants, especially in field crops such as potatoes, tobacco and sugarbeets, and wheat, rye, barley, oats, rice, maize, lawns, cotton, soybeans, oil seed rape, pulse crops, sunflower, coffee, sugarcane, fruit and ornamentals in horticulture and viticulture, in vegetables such as cucumbers, beans and cucurbits.

The term "useful plants" is to be understood as including also useful plants that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors) as a result of conventional methods of breeding or genetic engineering. An example of a crop that has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady® , Herculex I® and LibertyLink®.

The term "useful plants" is to be understood as including also useful plants which have been so transformed by the use of recombinant DNA techniques that they are capable of synthesising one or more selectively acting toxins, such as are known, for example, from toxin-producing bacteria, especially those of the genus Bacillus.

Toxins that can be expressed by such transgenic plants include, for example, insecticidal proteins, for example insecticidal proteins from Bacillus cereus or Bacillus popliae; or insecticidal proteins from Bacillus thuringiensis, such as δ-endotoxins, e.g. CrylA(b), CrylA(c), CrylF, CrylF(a2), CryIIA(b), CryIIIA, CryIIIB(b1) or Cry9c, or vegetative insecticidal proteins (VIP), e.g. VIP1, VIP2, VIP3 or VIP3A; or insecticidal proteins of bacteria colonising nematodes, for example Photorhabdus spp. or Xenorhabdus spp., such as Photorhabdus luminescens, Xenorhabdus nematophilus; toxins produced by animals, such as scorpion toxins, arachnid toxins, wasp toxins and other insect-specific neurotoxins; toxins produced by fungi, such as Streptomycetes toxins, plant lectins, such as pea lectins, barley lectins or snowdrop lectins; agglutinins; proteinase inhibitors, such as trypsine inhibitors, serine protease inhibitors, patatin, cystatin, papain inhibitors; ribosome-inactivating proteins (RIP), such as ricin, maize-RIP, abrin, luffin, saporin or bryodin; steroid metabolism enzymes, such as 3-hydroxysteroidoxidase, ecdysteroid-UDP-glycosyl-transferase, cholesterol oxidases, ecdysone inhibitors, HMG-COA-reductase, ion channel blockers, such as blockers of sodium or calcium channels, juvenile hormone esterase, diuretic hormone receptors, stilbene synthase, bibenzyl synthase, chitinases and glucanases.

In the context of the present invention there are to be understood by δ-endotoxins, for example CrylA(b), CrylA (c), CrylF, CrylF(a2), CryIIA(b), CryIIIA, CryIIIB(b1) or Cry9c, or vegetative insecticidal proteins (VIP), for example VIP1, VIP2, VIP3 or VIP3A, expressly also hybrid toxins, truncated toxins and modified toxins. Hybrid toxins are produced recombinantly by a new combination of different domains of those proteins (see, for example, WO 02/15701). An example for a truncated toxin is a truncated CrylA(b), which is expressed in the Bt11 maize from Syngenta Seed SAS, as described below. In the case of modified toxins, one or more amino acids of the naturally occurring toxin are replaced. In such amino acid replacements, preferably non-naturally present protease recognition sequences are inserted into the toxin, such as, for example, in the case of CryIIIA055, a cathepsin-D-recognition sequence is inserted into a CryIIIA toxin (see WO 03/018810)

Examples of such toxins or transgenic plants capable of synthesising such toxins are disclosed, for example, in EP-A-0 374 753, WO 93/07278, WO 95/34656, EP-A-0 427 529, EP-A-451 878 and WO 03/052073.

The processes for the preparation of such transgenic plants are generally known to the person skilled in the art and are described, for example, in the publications mentioned above. Cryl-type deoxyribonucleic acids and their preparation are known, for example, from WO 95/34656, EP-A-0 367 474, EP-A-0 401 979 and WO 90/13651.

The toxin contained in the transgenic plants imparts to the plants tolerance to harmful insects. Such insects can occur in any taxonomic group of insects, but are especially commonly found in the beetles (Coleoptera), two-winged insects (Diptera) and butterflies (Lepidoptera).

Transgenic plants containing one or more genes that code for an insecticidal resistance and express one or more toxins are known and some of them are commercially available. Examples of such plants are: YieldGard® (maize variety that expresses a CrylA(b) toxin); YieldGard Rootworm® (maize variety that expresses a CryIIIB(b1) toxin); YieldGard Plus® (maize variety that expresses a CrylA(b) and a CryIIIB(b1) toxin); Starlink® (maize variety that expresses

a Cry9(c) toxin); Herculex I® (maize variety that expresses a CryIF(a2) toxin and the enzyme phosphinothricine N-acetyltransferase (PAT) to achieve tolerance to the herbicide glufosinate ammonium); NuCOTN 33B® (cotton variety that expresses a CryIA(c) toxin); Bollgard I® (cotton variety that expresses a CryIA(c) toxin); Bollgard II® (cotton variety that expresses a CryIA(c) and a CryIIA(b) toxin); VIPCOT® (cotton variety that expresses a VIP toxin); NewLeaf® (potato variety that expresses a CryIIIA toxin); NatureGard® and Protecta®

Further examples of such transgenic crops are:

1. **Bt11 Maize** from Syngenta Seeds SAS, Chemin de l'Hobit 27, F-31 790 St. Sauveur, France, registration number C/FR/96/05/10. Genetically modified Zea *mays* which has been rendered resistant to attack by the European corn borer *(Ostrinia nubilalis* and *Sesamia nonagrioides)* by transgenic expression of a truncated CryIA(b) toxin. Bt11 maize also transgenically expresses the enzyme PAT to achieve tolerance to the herbicide glufosinate ammonium.
2. **Bt176 Maize** from Syngenta Seeds SAS, Chemin de l'Hobit 27, F-31 790 St. Sauveur, France, registration number C/FR/96/05/10. Genetically modified Zea *mays* which has been rendered resistant to attack by the European corn borer *(Ostrinia nubilalis* and *Sesamia nonagrioides)* by transgenic expression of a CryIA(b) toxin. Bt176 maize also transgenically expresses the enzyme PAT to achieve tolerance to the herbicide glufosinate ammonium.
3. **MIR604 Maize** from Syngenta Seeds SAS, Chemin de l'Hobit 27, F-31 790 St. Sauveur, France, registration number C/FR/96/05/10. Maize which has been rendered insect-resistant by transgenic expression of a modified CryIIIA toxin. This toxin is Cry3A055 modified by insertion of a cathepsin-D-protease recognition sequence. The preparation of such transgenic maize plants is described in WO 03/018810.
4. MON 863 Maize from Monsanto Europe S.A. 270-272 Avenue de Tervuren, B-1150 Brussels, Belgium, registration number C/DE/02/9. MON 863 expresses a CryIIIB(b1) toxin and has resistance to certain Coleoptera insects.
5. **IPC 531 Cotton** from Monsanto Europe S.A. 270-272 Avenue de Tervuren, B-1150 Brussels, Belgium, registration number C/ES/96/02.
6. **1507 Maize** from Pioneer Overseas Corporation, Avenue Tedesco, 7 B-1160 Brussels, Belgium, registration number C/NL/00/10. Genetically modified maize for the expression of the protein Cry1 F for achieving resistance to certain Lepidoptera insects and of the PAT protein for achieving tolerance to the herbicide glufosinate ammonium.
7. **NK603 x MON 810 Maize** from Monsanto Europe S.A. 270-272 Avenue de Tervuren, B-1150 Brussels, Belgium, registration number C/GB/02/M3/03. Consists of conventionally bred hybrid maize varieties by crossing the genetically modified varieties NK603 and MON 810. NK603 x MON 810 Maize transgenically expresses the protein CP4 EPSPS, obtained from *Agrobacterium sp.* strain CP4, which imparts tolerance to the herbicide Roundup® (contains glyphosate), and also a CryIA(b) toxin obtained from *Bacillus thuringiensis subsp. kurstaki* which brings about tolerance to certain Lepidoptera, include the European corn borer.

Transgenic crops of insect-resistant plants are also described in BATS (Zentrum für Biosicherheit und Nachhaltigkeit, Zentrum BATS, Clarastrasse 13, 4058 Basel, Switzerland) Report 2003, (http://bats.ch).

The term "useful plants" is to be understood as including also useful plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing such transgenic plants are generally known to the person skilled in the art and are described, for example, in the publications mentioned above.

Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins" (PRPs; see e.g. EP-A-0 392 225); antipathogenic substances produced by microorganisms, for example peptide antibiotics or heterocyclic antibiotics (see e.g. WO 95/33818) or protein or polypeptide factors involved in plant pathogen defence (so-called "plant disease resistance genes", as described in WO 03/000906).

Useful plants of elevated interest in connection with present invention are cereals; maize; turf; vines and vegetables, such as tomatoes, potatoes, cucurbits and lettuce.

The term "plant propagation material" is understood to denote all the generative parts of the plant, such as seeds, which can be used for the multiplication of the plant and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may also be protected before transplantation by a total or partial treatment by immersion of the plant propagation material.

Parts of plant and plant organs that grow at later point in time are any sections of a plant that develop from a plant propagation material, such as a seed. Parts of plant, plant organs, and plants can also benefit from the pathogenic

and/or pest damage protection achieved by the application of the combination on to the plant propagation material. In an embodiment, certain parts of plant and certain plant organs that grow at later point in time can also be considered as plant propagation material, which can themselves be applied (or treated) with the combination; and consequently, the plant, further parts of the plant and further plant organs that develop from the treated parts of plant and treated plant organs can also benefit from the pathogenic and/or pest damage protection achieved by the application of the combination on to the certain parts of plant and certain plant organs.

Methods for applying or treating pesticidal active ingredients, mixtures and compositions thereof on to plant propagation material, especially seeds, are known in the art, and include dressing, coating, pelleting and soaking application methods of the propagation material. In a preferred embodiment, the combination is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed, according to techniques understood by a skilled person, either before or after the treatment.

Even distribution of the active ingredients and adherence thereof to the seeds is desired during propagation material treatment. Treatment could vary from a thin film (dressing) of the formulation containing the active ingredient (s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the combination. In particular, seed coating or seed pelleting are preferred in the treatment of the combinations according to the invention. As a result of the treatment, the active ingredients in the combination are adhered on to the seed and therefore available for pathogenic and/or pest control.

The treated seeds can be stored, handled, sowed and tilled in the same manner as any other active ingredient treated seed.

The mixture of the present invention may also useful in the field of protecting stored products against attack of pathogen and/or pest. Suitable examples of such products include stalks, leafs, tubers, seeds, fruits (pomes, stone fruits, soft fruits and citrus fruits and their processed forms) or grains, which can be protected in the freshly harvested state or in processed form, such as pre-dried, moistened, comminuted, ground, pressed or roasted.

The active ingredient combinations according to the present invention are particularly effective against seedborne and soilborne diseases, such as Aphanomyces spp. Alternaria spp., Ascochyta spp., Aspergillus spp., Penicillium spp., Botrytis cinerea, Cercospora spp., Claviceps purpurea, Cochliobolus sativus, Colletotrichum spp., Diplodia maydis, Epicoccum spp., Fusarium culmorum, Fusarium graminearum, Fusarium moniliforme, Fusarium oxysporum, Fusarium proliferatum, Fusarium solani, Fusarium subglutinans, Gäumannomyces graminis , Helminthosporium spp., Microdochium nivale, Phakopsora pachyrhizi, Phoma spp., Pseudocercosporella herpotrichoides, Pyrenophora graminea, Pyricularia oryzae, Rhizoctonia solani, Rhizoctonia cerealis, Sclerotinia spp., Septoria spp., Sphacelotheca reilliana, Thielaviopsis basicola, Tilletia spp., Typhula incarnata, Urocystis occulta, Ustilago spp. or Verticillium spp.; in particular against pathogens of cereals, such as wheat, barley, rye or oats; maize; rice; cotton; soybean; turf; sugarbeet; oil seed rape; potatoes; pulse crops, such as peas, lentils or chickpea; and sunflower. The compositions of the present invention are furthermore particularly effective against rusts; powdery mildews; leafspot species; early blights; molds and post harvest dieseases; especially against Puccinia in cereals; Phakopsora in soybeans; Hemileia in coffee; Phragmidium in roses; Alternaria in potatoes, tomatoes and cucurbits; Sclerotinia in vegetables, sunflower and oil seed rape; black rot, red fire, powdery mildew, grey mold and dead arm disease in vine; Botrytis cinerea in fruits; Monilinia spp. in fruits and Penicillium spp. in fruits.

The active ingredient combinations of the invention are particularly useful for controlling the following plant

diseases:

Alternaria species in fruit and vegetables,
Ascochyta species in pulse crops,
Botrytis cinerea (gray mold) in strawberries, tomatoes, sunflower and grapes,
Cercospora arachidicola in groundnuts,
Cochliobolus sativus in cereals,
Colletotrichum species in pulse crops,
Erysiphe cichoracearum and Sphaerotheca fuliginea in cucurbits,
Fusarium graminearum in cereals and maize,
Gäumannomyces graminis in cereals and lawns,
Helminthosporium maydis in maize,
Helminthosporium oryzae in rice,
Helminthosporium solani on potatoes,
Hemileia vastatrix on coffee,
Microdochium nivale in wheat and rye,
Phakopsora pachyrhizi in soybean,
Puccinia species in cereals,
Phragmidium mucronatum in roses,
Pyrenophora graminea in barley,
Pyricularia oryzae in rice,
Rhizoctonia species in cotton, soybean, cereals, maize, potatoes, rice and lawns,
Sclerotinia homeocarpa in lawns,
Sphacelotheca reilliana in maize,
Tilletia species in cereals,
Typhula incarnata in barley,
Uncinula necator, Guignardia bidwellii and Phomopsis viticola in vines,
Urocystis occulta in rye,
Ustilago species in cereals and maize,
Monilinia fructicola on stone fruits,
Monilinia fructigena on fruits,
Monilinia laxa on stone fruits,
Penicillium digitatum on citrus,
Penicillium expansum on apples, and
Penicillium italicum on citrus,

In the event a mixture of the invention includes a pesticide other than fungicide (such as thiamethoxam) then the pesticide spectrum of the mixture is broadened to include pest control, such as control of pests selected from Nematoda, Insecta and Arachnida. In that instance, the combination can also be applied on the pest to control or prevent pest damage and protect the desired material (e.g. plant propagation material, plant and parts of plant) from pest damage. Examples of the abovementioned pests are:

from the order *Acarina,* for example,
Acarus siro, Aceria sheldoni, Aculus schlechtendali, Amblyomma spp., Argas spp., Boophilus spp., Brevipalpus spp., Bryobia praetiosa, Calipitrimerus spp., Chorioptes spp., Dermanyssus gallinae, Eotetranychus carpini, Eriophyes spp., Hyalomma spp., Ixodes spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp.;
from the order *Anoplura,* for example,
Haematopinus spp., Linognathus spp., Pediculus spp., Pemphigus spp. and Phylloxera spp.; from the order *Coleoptera,* for example,
Agriotes spp., Anthonomus spp., Atomaria linearis, Chaetocnema tibialis, Cosmopolites spp., Curculio spp., Dermestes spp., Diabrotica spp., Epilachna spp., Eremnus spp., Leptinotarsa decemlineata, Lissorhoptrus spp., Melolontha spp., Orycaephilus spp., Otiorhynchus spp., Phlyctinus spp., Popillia spp., Psylliodes spp., Rhizopertha spp., Scarabeidae, Sitophilus spp., Sitotroga spp., Tenebrio spp., Tribolium spp. and Trogoderma spp.;
from the order *Diptera,* for example,
Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp.,

Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp. and Tipula spp.;
from the order *Heteroptera,* for example,
Cimex spp., Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
from the order *Homoptera,* for example,
Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Parlatoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
from the order *Hymenoptera,* for example,
Acromyrmex, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;
from the order *Isoptera,* for example,
Reticulitermes spp.;
from the order *Lepidoptera,* for example,
Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiela, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
from the order *Mallophaga,* for example,
Damalinea spp. and Trichodectes spp.;
from the order *Orthoptera,* for example,
Blatta spp., Blattella spp., Gryllotalpa spp., Leucophaea maderae, Locusta spp., Periplaneta spp. and Schistocerca spp.;
from the order *Psocoptera,* for example,
Liposcelis spp.;
from the order *Siphonaptera,* for example,
Ceratophyllus spp., Ctenocephalides spp. and Xenopsylla cheopis;
from the order *Thysanoptera,* for example,
Frankliniella spp., Hercinothrips spp., Scirtothrips aurantii, Taeniothrips spp., Thrips palmi and Thrips tabaci;
from the order *Thysanura,* for example,
Lepisma saccharina;
nematodes, for example root knot nematodes, stem eelworms and foliar nematodes;
especially Heterodera spp., for example Heterodera schachtii, Heterodora avenae and Heterodora trifolii; Globodera spp., for example Globodera rostochiensis; Meloidogyne spp., for example Meloidogyne incoginita and Meloidogyne javanica; Radopholus spp., for example Radopholus similis; Pratylenchus, for example Pratylenchus neglectans and Pratylenchus penetrans; Tylenchulus, for example Tylenchulus semipenetrans; Longidorus, Trichodorus, Xiphinema, Ditylenchus, Aphelenchoides and Anguina;
crucifer flea beetles (Phyllotreta spp.);
root maggots (Delia spp.) and
cabbage seedpod weevil (Ceutorhynchus spp.).

The weight ratio of active ingredient compounds is selected as to give the desired, for example synergistic, action. In general, the weight ratio would vary depending on the specific active ingredient and how many active ingredients are present in the combination. Generally, the weight ratio of any two active ingredients in a combination is from from 2000 : 1 and 1 : 1000, preferably between 100 : 1 and 1: 100, preferably 10:1 to 1:10, such as 5:1 to 1:5, especially from

2.5:1 to 1:2.5, advantageously from 1.5:1 to 1:1.5.

The rates of application (use) of the active ingredients combination vary, for example, according to type of use, type of crop (for example, wheat seeds generally have less active ingredients adhered thereto than oil seed rape seeds based on equivalent weight of seeds), the specific active ingredients in the combination, type of plant propagation material (e.g., seed or tuber), the purpose of the treatment, such as, for example prophylactic or therapeutic; the type of pathogen or pest to be controlled, but is such that the active ingredients in the combination is an effective amount to provide the desired enhanced action (such as disease or pest control) and can be determined by trials.

Generally for seed treatment, application rates can vary from 0.5 to 1000g/ 100kg of seeds of active ingredients.

Typically Tebuconazole is applied a rate of 0.1 to 50, preferably 0.5 to 10, especially 1 to 5, g/ 100kg of seeds.

In the event, a mixture comprises the active ingredients Tebuconazole, and Mefenoxam, the application rates for (I) Tebuconazole, and (II) Mefenoxam tend to be 0.5 - 10, preferably 1 - 5, more preferably 2 — 4, g/100kg of seeds of (I); and 0.5 - 10, preferably 0.5 - 5, more preferably 1 - 3, g/100kg of seeds of (II).

The synergistic activity of the mixture is apparent from the fact, for example, that the biological activity of the mixture of A) + B) is greater than the sum of the biological activities of A) and B).

The plant propagation material treated by a composition of the fourth aspect of the present invention are, therefore, resistant to disease and/or pest damage; accordingly, the present invention also provides a pathogenic and/or pest resistant plant propagation material which is treated with the composition and consequently at least the active ingredients thereof are adhered on the propagation material, such a seed.

The composition according to the fourth aspect and mixture according to the first aspect of the present invention may be mixed with other active compounds. These further compounds can be other pesticidal active ingredients (e.g. fungicides, insecticides and nematicides), fertilizers or micronutrient donors or other preparations that influence plant growth, such as inoculants.

The plant propagation material protecting composition may be applied together and/or sequentially with further active compounds. These further compounds can be other pesticidal active ingredients, fertilizers or micronutrient donors or other preparations that influence plant growth, such as inoculants.

A single pesticidal active ingredient may have activity in more than area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

The formulated mixture according to the first aspect comprises defined active ingredient compounds (A) and (B) and at least one of the auxiliary (also known as adjuvants) customary in formulation technology, such as extenders, e.g., solvents or solid carriers, or surface-active compounds (surfactants), in any specific particle size.

The mixture of the invention can be formulated for a particular use. Preferably, the mixture is formulated for protecting propagation materials. Advantageously, the mixtures are formulated for seed treatment applications for controlling or preventing damage by pests and/or pathogens, which are found in agriculture and forestry, and can particularly damage the plant in the early stages of its development.

Whereas commercial products will preferably be formulated as concentrates (known as a pre-mix composition (or concentrate (or product)), the end user will normally employ diluted formulations, optionally also containing one or more other pesticide pre-mixes (known as a tank mix composition (or ready-to-apply, spray broth, or slurry)) for, for example, treatment of the propagation material, but can also use appropriately formulated pre-mix compositions.

The tank-mix compositions are generally prepared by diluting with a solvent (for example, water) the one or more pre-mix compositions containing different pesticides, and optionally further auxiliaries. Generally, an aqueous tank-mix is preferred.

Accordingly, examples of plant propagation material protection compositions of invention include tank-mix or slurry pesticidal compositions.

The expression "mixture" or "formulated mixture" as used herein preferably means a "ready-mix" formulation that contains the two or more active ingredients in a single formulation (also known as a pre-mix, concentrate (or product)).

The mixture of the invention may be employed in any conventional form. Examples of foliar formulation types for pre-mix compositions are:

GR: Granules
WP: wettable powders
WG: water dispersable granules (powders)
SG: water soluble granules
SL: soluble concentrates
EC: emulsifiable concentrate
EW: emulsions, oil in water
ME: micro-emulsion

SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are:

WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

A seed dressing formulation is applied in a manner known per se to the seeds employing the composition of the invention and a diluent in suitable seed dressing formulation form, e.g. as an aqueous suspension or in a dry powder form having good adherence to the seeds. Such seed dressing formulations are known in the art.

Generally, a tank-mix formulation for foliar or soil application comprises 0.1 to 20%, especially 0.1 to 15 %, active ingredient compounds, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, active ingredient compounds, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Preferred embodiments of the invention are "plant propagation material protecting compositions". Such "plant propagation material protecting compositions" are compositions according to the invention, which are used for the application to plant propagation material.

The plant propagation material protecting compositions according to the invention are applied to plant propagation material by treating plant propagation material with an effective amount of such a composition. Preferably, such compositions according to the invention are applied by adhering such compositions to plant propagation material in a pesticidal effective amount.

A preferred application method is seed treatment.

The plant propagation material protecting compositions according to the invention may be applied before or after infection of the plant propagation material by the pathogen.

The techniques of seed treatment application are well known to those skilled in the art, and they may be used readily in the context of the present invention. The plant propagation material protecting compositions according to the invention can be formulated and applied as a slurry, a solid seed coating, a soak, or as a dust on the surface of the seed. There also may be mentioned, e.g., film-coating or encapsulation. The coating processes are well known in the art, and employ, for seeds, the techniques of film-coating or encapsulation, or for the other multiplication products, the techniques of immersion. Needless to say, the method of application of such a composition to the seed may be varied and the invention is intended to include any technique which is to be used.

A preferred method of applying plant propagation material protecting compositions according to the invention

consists in spraying or wetting the plant propagation material with a liquid preparation, or mixing the plant material with a solid preparation of such compositions.

The plant propagation material protecting compositions according to the invention may be formulated or mixed in the seed treater tank or combined on the seed by overcoating with other seed treating agents. The agents to be mixed with such compositions may be for the control of pests, modification of growth, nutrition, or for the control of plant diseases.

The term "carrier" according to the invention denotes a natural or synthetic, organic or inorganic material with which the compound of formula I is combined in order to facilitate its application to the plant, to the seeds or to the soil. This carrier is hence generally inert, and it must be agriculturally acceptable, in particular to the plant being treated. The carrier may be solid (clays, natural or synthetic silicates, silica, resins, waxes, solid fertilizers, and the like) or liquid (water, alcohols, ketones, petroleum fractions, aromatic or paraffinic hydrocarbons, chlorinated hydrocarbons, liquefied gases, and the like).

Solid carriers which may be used, for example for dusts and dispersible powders, are calcite, talc, kaolin, montmorillonite or attapulgite, highly-disperse silica or absorptive polymers. Possible particulate, adsorptive carriers for granules are pumice, crushed brick, sepiolite or bentonite, montmorillonite-type clay, and possible nonsorbent carrier materials are calcite or dolomite.

Suitable liquid carriers are: aromatic hydrocarbons, in particular the fractions $C_8$ to $C_{12}$, such as xylene mixtures or substituted naphthalenes, phthalic esters such as dibutyl or dioctyl phthalate, aliphatic hydrocarbons such as cyclohexane or paraffins, alcohols and glycols as well as their ethers and esters, such as ethylene glycol monomethyl ether, ketones such as cyclohexanone, strongly polar solvents such as N-methyl-2-pyrrolidone, dimethyl sulfoxide or dimethylformamide, and, if appropriate, epoxidized vegetable oils or soybean oil; or water.

Suitable surface-active compounds are non-ionic, cationic and/or anionic surfactants having good emulsifying, dispersing and wetting properties, depending on the nature of the active ingredients to be formulated (whether only compounds of formula I or compounds of formula I in combination with other active ingredients). Surfactants will also be understood as meaning mixtures of surface-active compounds.

The surfactants customarily employed in formulation technology are described, inter alia, in the following publications:

"McCutcheon's Detergents and Emulsifiers Annual", MC Publishing Corp., Glen Rock, N.J., 1988.
M. and J. Ash, "Encyclopedia of Surfactants", Vol. I-III, Chemical Publishing Co., New York, 1980-1981.

Among the suitable surfactants there may be mentioned, e.g., polyacrylic acid salts, lignosulphonic acid salts, phenolsulphonic or (mono- or di-alkyl)naphthalenesulphonic acid salts, laurylsulfate salts, polycondensates of ethylene oxide with lignosulphonic acid salts, polycondensates of ethylene oxide with fatty alcohols or with fatty acids or with fatty amines, substituted phenols (in particular alkylphenols or arylphenols such as mono- and di-(polyoxyalkylene alkylphenol) phosphates, polyoxyalkylene alkylphenol carboxylates or polyoxyalkylene alkylphenol sulfates), salts of sulphosuccinic acid esters, taurine derivatives (in particular alkyltaurides), polycondensates of ethylene oxide with phosphated tristyrylphenols and polycondensates of ethylene oxide with phosphoric esters of alcohols or phenols. The presence of at least one surfactant is often required because the active ingredients and/or the inert vehicles are not soluble in water and the carrier for the application is water.

Furthermore, particularly useful adjuvants which enhance application are natural or synthetic phospholipids from the series of the cephalins and lecithins, for example phosphatidylethanolamine, phosphatidylserine, phosphatidylglycerine or lysolecithin.

The plant propagation material protecting composition or mixture may also comprise at least one polymer from water-soluble and water-dispersible film-forming polymers that improve the adherence of the active ingredients to the treated plant propagation material, which polymer generally has an average molecular weight of at least 10,000 to about 100,000.

Typically a colouring agent, such as a dye or pigment, is included in the plant propagation material protecting composition, so that an observer can immediately determine that the plant propagation material is treated. Plant propagation material protecting compositions comprising a colouring agent are preferred embodiments of the plant propagation material protecting compositions according to the invention, as they improve user and consumer safety. The colouring agent is also useful to indicate to the user the degree of uniformity of the applied plant propagation material protecting composition.

Generally, the colouring agent tends to have a melting point above 30°C, and therefore, is suspended in the plant propagation material protecting composition of the present invention. The colouring agent can also be a soluble compound.

As examples of colouring agents may be mentioned pigment red 48-2 (CAS-7023-61-2), pigment blue 15 (CAS-147-14-8), pigment green 7 (CAS-1328-53-6), pigment violet 23 (CAS-6358-30-1), pigment red 53-1 (CAS-5160-02-1), pigment red 57-1 (CAS 5281-04-9), pigment red 112 (CAS 6535-46-2) or similar colouring agents.

The formulated mixtures of the present invention tend to comprise between 0.1 to 10% by mass of a colouring agent.

In general, the formulated mixtures of the invention contain 0.5 to 99.9 especially 1 to 95, advantageously 1 to 50 , %, by mass of active ingredient compounds, and 99.5 to 0.1, especially 99 to 5; %, by mass of a solid or liquid adjuvant (including, for example, a solvent such as water), where the auxiliaries (or adjuvant) can be a surfactant in an amount of 0 to 50, especially 0.5 to 40, %, by mass based on the mass of the pre-mix formulation.

A preferred embodiment is a plant propagation material protecting composition, wherein said plant propagation material protecting composition comprises additionally a colouring agent.

The Examples which follow serve to illustrate the invention, "active ingredient" denoting a mixture of A) & B) in a specific mixing ratio.

Formulation Examples

| Wettable powders | a) | b) | c) |
|---|---|---|---|
| active ingredient [A) : B) = 1:3(a), 1:2(b), 1:1 (c)] | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5% | 10 % | 10 % |
| Kaolin | 62 % | 27% | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient [A) : B) = 1:3(a), 1:2(b), 1:1 (c)] | 25 % | 50 % | 75 % |
| light mineral oil | 5% | 5% | 5% |
| highly dispersed silicic acid | 5% | 5% | - |
| Kaolin | 65% | 40 % | - |
| Talcum | - | | 20 |

The active ingredient is thoroughly mixed with the adjuvants and the mixture is thoroughly ground in a suitable mill, affording powders that can be used directly for seed treatment.

| Emulsifiable concentrate | |
|---|---|
| active ingredient (A) : B) = 1:6) | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient [A): B) = 1:6(a), 1:2(b), 1:10(c)] | 5% | 6 % | 4% |
| Talcum | 95% | - | - |
| Kaolin | - | 94% | - |
| mineral filler | - | - | 96 % |

Ready-for-use dusts are obtained by mixing the active ingredient with the carrier and grinding the mixture in a suitable mill. Such powders can also be used for dry dressings for seed.

| Extruder granules | |
|---|---|
| Active ingredient (A): B) = 2:1) | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

| Coated granules | |
|---|---|
| Active ingredient (A) : B) = 1:10) | 8% |
| polyethylene glycol (mol. wt. 200) | 3 % |
| Kaolin | 89% |

The finely ground active ingredient is uniformly applied, in a mixer, to the kaolin moistened with polyethylene glycol. Non-dusty coated granules are obtained in this manner.

| Suspension concentrate | |
|---|---|
| active ingredient (A) : B) = 1:8) | 40 % |
| propylene glycol | 10 % |
| nonylphenol polyethylene glycol ether (15 mol of ethylene oxide) | 6 % |
| Sodium lignosulfonate | 10 % |
| carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

| Flowable concentrate for seed treatment | |
|---|---|
| active ingredient (A) : B) = 1:8) | 40 % |
| propylene glycol | 5 % |
| copolymer butanol PO/EO | 2 % |
| Tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

<u>Slow Release Capsule Suspension</u>

28 parts of a combination of Tebuconazole and a compound of component B), or of each of these compounds

separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The capsule suspension formulation contains 28% of the active ingredients. The medium capsule diameter is 8-15 microns. The resulting formulation is applied to seeds as an aqueous suspension in an apparatus suitable for that purpose.

Using such formulations either straight or diluted plant propagation material can be treated and protected against damage, for example, from pathogen(s), by, for example, spraying, pouring or immersing.

The active ingredient combinations according to the invention are distinguished by the fact that they are especially well tolerated by plants and are environmentally friendly.

In a preferred embodiment, each of the combination of the present invention is a mixture suitable for plant propagation material, preferably seed, treating.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

As used herein, the amount in % are based on mass.

The following Examples are given by way of illustration and not by way of limitation of the invention.

## Biological Examples

A synergistic effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967): ppm = milligrams of active ingredient (= a.i.) per liter of spray mixture

X = % action by active ingredient A) using p ppm of active ingredient

Y = % action by active ingredient B) using q ppm of active ingredient.

According to COLBY, the expected (additive) action of active ingredients A)+B) using p+q ppm of active ingredient is

$$E = X + Y - \frac{X \cdot Y}{100}$$

If the action actually observed (O) is greater than the expected action (E), then the action of the combination is super-additive, i.e. there is a synergistic effect.

Inhibiting of fungal growth of the following fungi are carried out by fungal growth assays (detailed below).

***Pythium ultimum*** **(Damping off):** Mycelial fragments of the fungus, prepared from a fresh liquid culture, are directly mixed into nutrient broth (PDB potato dextrose broth). After placing a (DMSO) solution of the test compounds into a microtiter plate (96-well format) the nutrient broth containing the fungal spores is added. The test plates are incubated at 24 C and the inhibition of growth is determined photometrically after 48 hrs.

***Rhizoctonia solani*** **(foot rot, damping-off):** Mycelial fragments of a newly grown culture of the fungus, are directly mixed into nutrient broth (PDB potato dextrose broth). After placing a (DMSO) solution of the test compounds into a microtiter plate (96-well format) the nutrient broth containing the fungal spores is added. The test plates were incubated at 24 C and the inhibition of growth is measured photometrically after 72 hrs.

***Ustilago nuda*** **(barley loose smut):** Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24 C and the inhibition of growth is measured photometrically after 48 hrs.

***Pyrenophora graminea*** **(leaf stripe of barley):**Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24 C and the inhibition of growth is measured photometrically after 72 hrs.

***Monographella nivalis*** (Fusarium patch on turf): Conidia of the fungus from cryogenic storage are directly mixed

into nutrient broth (PDB potato dextrose broth). After placing a (DMSO) solution of the test compounds into a microtiter plate (96-well format) the nutrient broth containing the fungal spores is added. The test plates are incubated at 24 C and the inhibition of growth is measured photometrically after 72 hrs.

***Fusarium graminearum* (ear rot of maize):** Conidia of the fungus from cryogenic storage are directly mixed into nutrient broth (PDB potato dextrose broth). After placing a (DMSO) solution of the test compounds into a microtiter plate (96-well format) the nutrient broth containing the fungal spores is added. The test plates are incubated at 24 C and the inhibition of growth is measured photometrically after 48 hrs.

***Gaeumannomyces graminis* (take-all disease):** Mycelial fragments of a newly grown culture of the fungus, are directly mixed into nutrient broth (PDB potato dextrose broth). After placing a (DMSO) solution of the test compounds into a microtiter plate (96-well format) the nutrient broth containing the fungal spores is added. The test plates were incubated at 24 C and the inhibition of growth is measured photometrically after 72 hrs.

The activity of the following mixtures is provided below

- B1- tebuconazole & mefenoxam,
- B2 - tebuconazole & difenconazole
- B3 - tebuconazole & difenconazole, azoxystrobin, and
- B4 - tebuconazole, difenconazole and mefenoxam,

**B1 - Mixture of Tebuconazole and Mefenoxam**

| Control of *Fusarium graminearum* | | | |
|---|---|---|---|
| Tebuconazole [ppm] | Mefenoxam [ppm] | % activity expected | % activity observed |
| 10.000 | | | 100 |
| 3.333 | | | 98 |
| 1.111 | | | 50 |
| 0.370 | | | 37 |
| 0.123 | | | 15 |
| 0.041 | | | 11 |
| 0.014 | | | 3 |
| | 10.000 | | 1 |
| | 3.333 | | 2 |
| | 1.111 | | 0 |
| | 0.370 | | 0 |
| | 0.123 | | 0 |
| | 0.041 | | 0 |
| | 0.014 | | 6 |
| 0.123 | 0.370 | 15 | 26 |

| Control of *Pyrenophora graminea* | | | |
|---|---|---|---|
| Tebuconazole [ppm] | Mefenoxam [ppm] | % activity expected | % activity observed |
| 10.000 | | | 94 |
| 3.333 | | | 87 |
| 1.111 | | | 77 |
| 0.370 | | | 57 |
| 0.123 | | | 48 |
| 0.041 | | | 17 |
| 0.014 | | | 3 |
| | 10.000 | | 0 |
| | 3.333 | | 0 |
| | 1.111 | | 0 |
| | 0.370 | | 0 |
| | 0.123 | | 0 |
| | 0.041 | | 0 |
| | 0.014 | | 5 |
| 0.014 | 0.123 | 3 | 10 |

| Control of *Rhizoctonia solani* | | | |
|---|---|---|---|
| Tebuconazole | Mefenoxam [ppm] | % activity expected | % activity observed |
| 10.000 | | | 100 |
| 3.333 | | | 96 |
| 1.111 | | | 47 |
| 0.370 | | | 29 |
| 0.123 | | | 18 |
| 0.041 | | | 8 |
| 0.014 | | | 17 |
| | 10.000 | | 16 |
| | 3.333 | | 13 |
| | 1.111 | | 0 |
| | 0.370 | | 6 |
| | 0.123 | | 21 |
| | 0.041 | | 6 |
| | 0.014 | | 31 |
| 1.111 | 3.333 | 54 | 67 |
| 1.111 | 0.014 | 63 | 87 |

| Control of *Gaeumannomyces graminis* | | | |
|---|---|---|---|
| Tebuconazole [ppm] | Mefenoxam [ppm] | % activity expected | % activity observed |
| 10.000 | | | 96 |
| 3.333 | | | 98 |
| 1.111 | | | 98 |
| 0.370 | | | 97 |
| 0.123 | | | 64 |
| 0.041 | | | 16 |
| 0.014 | | | 6 |
| | 10.000 | | 0 |
| | 3.333 | | 4 |
| | 1.111 | | 0 |
| | 0.370 | | 4 |
| | 0.123 | | 3 |
| | 0.041 | | 0 |
| | 0.014 | | 0 |
| 0.041 | 0.041 | 16 | 21 |
| 0.014 | 0.014 | 6 | 14 |

| Control of *Ustilago nuda* | | | |
|---|---|---|---|
| Tebuconazole [ppm] | Mefenoxam [ppm] | % activity expected | % activity observed |
| 10.000 | | | 26 |
| 3.333 | | | 0 |
| 1.111 | | | 4 |
| 0.370 | | | 4 |
| 0.123 | | | 0 |
| 0.041 | | | 0 |
| 0.014 | | | 0 |
| | 10.000 | | 0 |
| | 3.333 | | 2 |
| | 1.111 | | 0 |
| | 0.370 | | 2 |
| | 0.123 | | 0 |
| | 0.041 | | 5 |
| | 0.014 | | 8 |
| 0.370 | 10.000 | 4 | 10 |

| Control of *Monographella nivalis* | | | |
|---|---|---|---|
| Tebuconazole [ppm] | Mefenoxam [ppm] | % activity expected | % activity observed |
| 10.000 | | | 94 |
| 3.333 | | | 62 |
| 1.111 | | | 0 |
| 0.370 | | | 3 |
| 0.123 | | | 0 |
| 0.041 | | | 3 |
| 0.014 | | | 9 |
| | 10.000 | | 25 |
| | 3.333 | | 0 |
| | 1.111 | | 0 |
| | 0.370 | | 1 |
| | 0.123 | | 1 |
| | 0.041 | | 1 |
| | 0.014 | | 5 |
| 3.333 | 1.111 | 62 | 75 |
| 3.333 | 0.014 | 64 | 95 |
| 0.123 | 0.014 | 5 | 12 |

**B2 - Mixture of Tebuconazole and Difenconazole**

| Control of *Pythium ultimum* | | | |
|---|---|---|---|
| Tebuconazole [ppm] | Difenconazole [ppm] | % activity expected | % activity observed |
| 10.000 | | | 22 |
| 3.333 | | | 0 |
| 1.111 | | | 0 |
| 0.370 | | | 0 |
| 0.123 | | | 1 |
| 0.041 | | | 0 |
| 0.014 | | | 0 |
| | 10.000 | | 7 |
| | 3.333 | | 0 |
| | 1.111 | | 0 |
| | 0.370 | | 0 |
| | 0.123 | | 0 |

(continued)

| Control of *Pythium ultimum* | | | |
|---|---|---|---|
| Tebuconazole [ppm] | Difenconazole [ppm] | % activity expected | % activity observed |
| | 0.041 | | 0 |
| | 0.014 | | 5 |
| 1.111 | 10.000 | 8 | 15 |
| 0.014 | 10.000 | 8 | 17 |

| Control of *Fusarium graminearum* | | | |
|---|---|---|---|
| Tebuconazole [ppm] | Difenconazole [ppm] | % activity expected | % activity observed |
| 10 | | | 94 |
| 3.3333 | | | 94 |
| 1.1111 | | | 66 |
| 0.3704 | | | 33 |
| 0.1235 | | | 16 |
| 0.0412 | | | 7 |
| 0.0137 | | | 0 |
| | 10 | | 92 |
| | 3.3333333 | | 73 |
| | 1.1111111 | | 34 |
| | 0.3703704 | | 16 |
| | 0.123 | | 14 |
| | 0.041 | | 6 |
| | 0.014 | | 8 |
| 1.1111 | 1.111 | 78 | 94 |
| 0.0412 | 0.370 | 22 | 27 |

| Control of *Pyrenophora graminea* | | | |
|---|---|---|---|
| Tebuconazole [ppm] | Difenconazole [ppm] | % activity expected | % activity observed |
| 10.000 | | | 90 |
| 3.333 | | | 82 |
| 1.111 | | | 75 |
| 0.370 | | | 54 |
| 0.123 | | | 46 |
| 0.041 | | | 13 |

(continued)

| Control of *Pyrenophora graminea* | | | |
|---|---|---|---|
| Tebuconazole [ppm] | Difenconazole [ppm] | % activity expected | % activity observed |
| 0.014 | | | 1 |
| | 10.000 | | 86 |
| | 3.333 | | 87 |
| | 1.111 | | 86 |
| | 0.370 | | 70 |
| | 0.123 | | 41 |
| | 0.041 | | 29 |
| | 0.014 | | 20 |
| 0.041 | 0.014 | 30 | 42 |

| Control of *Rhizoctonia solani* | | | |
|---|---|---|---|
| Tebuconazole [ppm] | Difenconazole [ppm] | % activity expected | % activity observed |
| 10.000 | | | 99 |
| 3.333 | | | 87 |
| 1.111 | | | 68 |
| 0.370 | | | 11 |
| 0.123 | | | 0 |
| 0.041 | | | 0 |
| 0.014 | | | 0 |
| | 10.000 | | 84 |
| | 3.333 | | 88 |
| | 1.111 | | 84 |
| | 0.370 | | 30 |
| | 0.123 | | 27 |
| | 0.041 | | 0 |
| | 0.014 | | 5 |
| 0.041 | 0.370 | 30 | 54 |
| 0.014 | 0.370 | 30 | 41 |
| 0.370 | 0.014 | 15 | 30 |
| 0.123 | 0.014 | 5 | 21 |
| 0.041 | 0.014 | 5 | 21 |
| 0.014 | 0.014 | 5 | 14 |

| Control of *Ustilago nuda* | | | |
|---|---|---|---|
| Tebuconazole [ppm] | Difenconazole [ppm] | % activity expected | % activity observed |
| 10.000 | | | 22 |
| 3.333 | | | 7 |
| 1.111 | | | 0 |
| 0.370 | | | 0 |
| 0.123 | | | 0 |
| 0.041 | | | 0 |
| 0.014 | | | 0 |
| | 10.000 | | 60 |
| | 3.333 | | 0 |
| | 1.111 | | 0 |
| | 0.370 | | 0 |
| | 0.123 | | 0 |
| | 0.041 | | 0 |
| | 0.014 | | 4 |
| 10.000 | 10.000 | 68 | 100 |
| 3.333 | 10.000 | 62 | 92 |
| 1.111 | 10.000 | 60 | 84 |
| 10.000 | 3.333 | 22 | 47 |

**B3 - Mixture of Tebuconazole, Difenconazole and Azoxystrobin**

| Control of *Pythium ultimum* | | | |
|---|---|---|---|
| Tebuconazole [ppm] | Difenconazole [ppm] | % activity expected | % activity observed |
| 10.000 | | | 19 |
| 3.333 | | | 2 |
| 1.111 | | | 4 |
| 0.370 | | | 0 |
| 0.123 | | | 2 |
| 0.041 | | | 4 |
| 0.014 | | | 3 |
| | 10.000 | | 31 |
| | 3.333 | | 14 |
| | 1.111 | | 0 |
| | 0.370 | | 0 |
| | 0.123 | | 0 |

(continued)

| Control of *Pythium ultimum* | | | |
|---|---|---|---|
| Tebuconazole [ppm] | Difenconazole [ppm] | % activity expected | % activity observed |
| | 0.041 | | 0 |
| | 0.014 | | 8 |
| 3.333 | 3.333 | 15 | 20 |
| 1.111 | 3.333 | 17 | 25 |

| Control of *Fusarium graminearum* | | | |
|---|---|---|---|
| Tebuconazole [ppm] | Difenconazole + azoxystrobin [ppm] | % activity expected | % activity observed |
| 10.000 | | | 95 |
| 3.333 | | | 94 |
| 1.111 | | | 62 |
| 0.370 | | | 34 |
| 0.123 | | | 23 |
| 0.041 | | | 5 |
| 0.014 | | | 7 |
| | 10.000 | | 91 |
| | 3.333 | | 49 |
| | 1.111 | | 35 |
| | 0.370 | | 13 |
| | 0.123 | | 4 |
| | 0.041 | | 0 |
| | 0.014 | | 4 |
| 0.041 | 0.123 | 8 | 13 |

| Control of *Pyrenophora graminea* | | | |
|---|---|---|---|
| Tebuconazole [ppm] | Difenconazole + azoxystrobin [ppm] | % activity expected | % activity observed |
| 10.000 | | | 89 |
| 3.333 | | | 84 |
| 1.111 | | | 74 |
| 0.370 | | | 54 |
| 0.123 | | | 43 |
| 0.041 | | | 10 |
| 0.014 | | | 0 |

(continued)

| Control of *Pyrenophora graminea* | | | |
|---|---|---|---|
| Tebuconazole [ppm] | Difenconazole + azoxystrobin [ppm] | % activity expected | % activity observed |
| | 10.000 | | 91 |
| | 3.333 | | 89 |
| | 1.111 | | 90 |
| | 0.370 | | 71 |
| | 0.123 | | 49 |
| | 0.041 | | 24 |
| | 0.014 | | 10 |
| 0.014 | 0.041 | 24 | 29 |
| 0.041 | 0.014 | 19 | 30 |
| 0.014 | 0.014 | 10 | 23 |

| Control of *Rhizoctonia solani* | | | |
|---|---|---|---|
| Tebuconazole [ppm] | Difenconazole + azoxystrobin [ppm] | % activity expected | % activity observed |
| 10.000 | | | 96 |
| 3.333 | | | 89 |
| 1.111 | | | 62 |
| 0.370 | | | 14 |
| 0.123 | | | 0 |
| 0.041 | | | 17 |
| 0.014 | | | 12 |
| | 10.000 | | 96 |
| | 3.333 | | 100 |
| | 1.111 | | 100 |
| | 0.370 | | 72 |
| | 0.123 | | 39 |
| | 0.041 | | 21 |
| | 0.014 | | 23 |
| 0.041 | 0.370 | 77 | 98 |
| 0.014 | 0.370 | 76 | 100 |
| 0.123 | 0.123 | 39 | 51 |
| 0.123 | 0.041 | 21 | 36 |
| 0.123 | 0.014 | 23 | 32 |

| *Control of Ustilago nuda* | | | |
|---|---|---|---|
| Tebuconazole [ppm] | Difenconazole + azoxystrobin [ppm] | % activity expected | % activity observed |
| 10.000 | | | 27 |
| 3.333 | | | 9 |
| 1.111 | | | 4 |
| 0.370 | | | 0 |
| 0.123 | | | 7 |
| 0.041 | | | 0 |
| 0.014 | | | 0 |
| | 10.000 | | 98 |
| | 3.333 | | 91 |
| | 1.111 | | 35 |
| | 0.370 | | 0 |
| | 0.123 | | 0 |
| | 0.041 | | 0 |
| | 0.014 | | 3 |
| 10.000 | 1.111 | 53 | 100 |
| 3.333 | 1.111 | 41 | 94 |
| 1.111 | 1.111 | 38 | 72 |
| 0.370 | 1.111 | 35 | 61 |
| 10.000 | 0.370 | 27 | 98 |
| 3.333 | 0.370 | 9 | 42 |
| 1.111 | 0.370 | 4 | 18 |
| 10.000 | 0.123 | 27 | 60 |

| Control of *Monographella nivalis* | | | |
|---|---|---|---|
| Tebuconazole [ppm] | Difenconazole + azoxystrobin [ppm] | % activity expected | % activity observed |
| 10.000 | | | 95 |
| 3.333 | | | 71 |
| 1.111 | | | 0 |
| 0.370 | | | 1 |
| 0.123 | | | 1 |
| 0.041 | | | 3 |
| 0.014 | | | 6 |
| | 10.000 | | 90 |
| | 3.333 | | 89 |
| | 1.111 | | 90 |

(continued)

| Control of *Monographella nivalis* | | | |
|---|---|---|---|
| Tebuconazole [ppm] | Difenconazole + azoxystrobin [ppm] | % activity expected | % activity observed |
| | 0.370 | | 89 |
| | 0.123 | | 89 |
| | 0.041 | | 35 |
| | 0.014 | | 21 |
| 0.370 | 0.041 | 35 | 43 |
| 0.370 | 0.014 | 22 | 30 |

**B4 - Mixture of Tebuconazole, Difenoconazole and Mefenoxam**

| Control of *Pythium ultimum* | | | |
|---|---|---|---|
| Tebuconazole [ppm] | Difenconazole + mefenoxam [ppm] | % activity expected | % activity observed |
| 10.000 | | | 16 |
| 3.333 | | | 3 |
| 1.111 | | | 1 |
| 0.370 | | | 4 |
| 0.123 | | | 1 |
| 0.041 | | | 0 |
| 0.014 | | | 0 |
| | 10.000 | | 89 |
| | 3.333 | | 90 |
| | 1.111 | | 83 |
| | 0.370 | | 70 |
| | 0.123 | | 62 |
| | 0.041 | | 27 |
| | 0.014 | | 15 |
| 1.111 | 0.041 | 28 | 39 |

| Control of *Fusarium graminearum* | | | |
|---|---|---|---|
| Tebuconazole [ppm] | Difenconazole + mefenoxam [ppm] | % activity expected | % activity observed |
| 10.000 | | | 97 |
| 3.333 | | | 88 |
| 1.111 | | | 55 |

(continued)

| Control of *Fusarium graminearum* | | | |
|---|---|---|---|
| Tebuconazole [ppm] | Difenconazole + mefenoxam [ppm] | % activity expected | % activity observed |
| 0.370 | | | 39 |
| 0.123 | | | 11 |
| 0.041 | | | 9 |
| 0.014 | | | 1 |
| | 10.000 | | 94 |
| | 3.333 | | 45 |
| | 1.111 | | 28 |
| | 0.370 | | 12 |
| | 0.123 | | 8 |
| | 0.041 | | 5 |
| | 0.014 | | 9 |
| 1.111 | 3.333 | 75 | 93 |
| 0.370 | 3.333 | 66 | 80 |
| 1.111 | 1.111 | 68 | 91 |
| 0.041 | 0.041 | 14 | 24 |

| Control of *Pyrenophora graminea* | | | |
|---|---|---|---|
| Tebuconazole [ppm] | Difenconazole + mefenoxam [ppm] | % activity expected | % activity observed |
| 10.000 | | | 91 |
| 3.333 | | | 89 |
| 1.111 | | | 74 |
| 0.370 | | | 54 |
| 0.123 | | | 41 |
| 0.041 | | | 11 |
| 0.014 | | | 7 |
| | 10.000 | | 89 |
| | 3.333 | | 86 |
| | 1.111 | | 84 |
| | 0.370 | | 58 |
| | 0.123 | | 39 |
| | 0.041 | | 13 |
| | 0.014 | | 3 |
| 0.041 | 0.041 | 23 | 31 |
| 0.014 | 0.041 | 19 | 30 |

(continued)

| Control of *Pyrenophora graminea* | | | |
|---|---|---|---|
| Tebuconazole [ppm] | Difenconazole + mefenoxam [ppm] | % activity expected | % activity observed |
| 0.041 | 0.014 | 14 | 31 |

| Control of *Rhizoctonia solani* | | | |
|---|---|---|---|
| Tebuconazole [ppm] | Difenconazole + mefenoxam [ppm] | % activity expected | % activity observed |
| 10.000 | | | 100 |
| 3.333 | | | 91 |
| 1.111 | | | 68 |
| 0.370 | | | 8 |
| 0.123 | | | 7 |
| 0.041 | | | 0 |
| 0.014 | | | 10 |
| | 10.000 | | 100 |
| | 3.333 | | 98 |
| | 1.111 | | 100 |
| | 0.370 | | 29 |
| | 0.123 | | 29 |
| | 0.041 | | 9 |
| | 0.014 | | 8 |
| 0.123 | 0.370 | 34 | 51 |
| 0.370 | 0.041 | 16 | 37 |
| 0.370 | 0.014 | 15 | 29 |
| 0.123 | 0.014 | 15 | 29 |
| 0.041 | 0.014 | 8 | 16 |

| Control of *Gaeumannomyces graminis* | | | |
|---|---|---|---|
| Tebuconazole [ppm] | Difenconazole + mefenoxam [ppm] | % activity expected | % activity observed |
| 10.000 | | | 98 |
| 3.333 | | | 100 |
| 1.111 | | | 100 |
| 0.370 | | | 96 |
| 0.123 | | | 61 |
| 0.041 | | | 15 |

(continued)

| Control of *Gaeumannomyces graminis* | | | |
|---|---|---|---|
| Tebuconazole [ppm] | Difenconazole + mefenoxam [ppm] | % activity expected | % activity observed |
| 0.014 | | | 1 |
| | 10.000 | | 93 |
| | 3.333 | | 93 |
| | 1.111 | | 92 |
| | 0.370 | | 54 |
| | 0.123 | | 15 |
| | 0.041 | | 4 |
| | 0.014 | | 0 |
| 0.123 | 0.123 | 67 | 82 |
| 0.041 | 0.123 | 27 | 40 |
| 0.014 | 0.123 | 16 | 36 |
| 0.041 | 0.041 | 18 | 33 |
| 0.014 | 0.041 | 5 | 16 |

| Control of *Ustilago nuda* | | | |
|---|---|---|---|
| Tebuconazole [ppm] | Difenconazole + mefenoxam [ppm] | % activity expected | % activity observed |
| 10.000 | | | 27 |
| 3.333 | | | 14 |
| 1.111 | | | 6 |
| 0.370 | | | 9 |
| 0.123 | | | 0 |
| 0.041 | | | 0 |
| 0.014 | | | 0 |
| | 10.000 | | 37 |
| | 3.333 | | 18 |
| | 1.111 | | 0 |
| | 0.370 | | 0 |
| | 0.123 | | 0 |
| | 0.041 | | 0 |
| | 0.014 | | 19 |
| 10.000 | 10.000 | 54 | 93 |

| Control *of Monographella nivalis* | | | |
|---|---|---|---|
| Tebuconazole [ppm] | Difenconazole + mefenoxam [ppm] | % activity expected | % activity observed |
| 10.000 | | | 94 |
| 3.333 | | | 77 |
| 1.111 | | | 0 |
| 0.370 | | | 7 |
| 0.123 | | | 1 |
| 0.041 | | | 4 |
| 0.014 | | | 6 |
| | 10.000 | | 90 |
| | 3.333 | | 90 |
| | 1.111 | | 1 |
| | 0.370 | | 0 |
| | 0.123 | | 0 |
| | 0.041 | | 2 |
| | 0.014 | | 0 |
| 1.111 | 1.111 | 1 | 85 |
| 0.370 | 1.111 | 9 | 28 |
| 0.123 | 1.111 | 2 | 15 |
| 0.123 | 0.014 | 1 | 19 |
| 0.041 | 0.014 | 4 | 11 |

## Claims

1. A formulated fungicide mixture comprising (A) Tebuconazole; and (B) one or more compounds selected from Difenoconazole, Azoxystrobin, and (C) one or more customary formulation adjuvants; with the proviso that the mixture excludes the mixtures consisting, as active ingredients, of tebuconazole, difenconazole and fludioxonil.

2. The mixture according to claim 1, wherein component B) is Difenoconazole; and wherein the mixture further comprises Azoxystrobin or Mefenoxam.

3. The mixture according to either claim 1, wherein component B) is Azoxystrobin; and wherein the mixture further comprises Difenoconazole or Mefenoxam.

4. The mixture according to any one of claims 1 to 3, wherein the weight ratio of any two active ingredients in the mixture is from 2000 : 1 and 1 : 1000.

5. The mixture according to any one of claims 1 to 4, wherein the mixture further comprises one or more other fungicides.

6. The mixture according to any one of claims 1 to 5, wherein the mixture further comprises one or more other insecticides and/or nematicides.

7. The mixture according to any one of claims 1 to 6 in the form of a plant propagation material protecting composition.

8. The mixture according to claim 7 which comprises a colouring agent.

**9.** A method of controlling or preventing pathogenic damage or pest damage in a plant propagation material, a plant, parts of a plant and/or plant organs that grow at a later point in time, which comprises applying on the plant propagation material a composition comprising a formulated mixture defined in any one of claims 1 to 8.

**10.** A method of protecting a plant propagation material, a plant, parts of a plant and/or plant organs that grow at a later point in time against pathogenic damage or pest damage by applying to the plant propagation material a composition comprising a formulated mixture defined in any one of claims 1 to 8.

**11.** A method of improving the growing characterictics of a plant, which comprises applying to a plant propagation material a composition comprising a formulated mixture defined in any one of claims 1 to 8.

**12.** The method according to any one of claims 9 to 11, wherein the composition is applied on a seed.

**13.** A plant propagation material protecting composition comprising a mixture defined in any one of claims 1 to 8.

**14.** A plant propagation material treated with a composition defined in claim 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0040345 A
- WO 03015519 A
- WO 03074491 A
- WO 2006015865 A
- WO 2006015866 A
- WO 0215701 A
- WO 03018810 A
- EP 0374753 A
- WO 9307278 A
- WO 9534656 A
- EP 0427529 A
- EP 451878 A
- WO 03052073 A
- EP 0367474 A
- EP 0401979 A
- WO 9013651 A
- EP 0392225 A
- WO 9533818 A
- EP 0353191 A
- WO 03000906 A


### Non-patent literature cited in the description


- e-Pesticide Manual. British Crop Protection Council, May 2004
- **Glen Rock, N.J.** McCutcheon's Detergents and Emulsifiers Annual. MC Publishing Corp, 1988
- **M. ; J. Ash.** Encyclopedia of Surfactants. Chemical Publishing Co, 1980, vol. I-III
- Calculating synergistic and antagonistic responses of herbicide combination. **COLBY, S.R.** Weeds. 1967, vol. 15, 20-22